Europäisches Patentamt

European Patent Office

Office européen des brevets

(19)

(11) Publication number:

**0 354 968**
**A1**

## EUROPEAN PATENT APPLICATION
### published in accordance with Art. 158(3) EPC

(21) Application number: 89902077.0

(22) Date of filing: 03.02.89

(86) International application number:
PCT/JP89/00117

(87) International publication number:
WO 89/07790 (24.08.89 89/20)

(51) Int. Cl.4 **G05B 19/04**

(30) Priority: 17.02.88 JP 34726/88

(43) Date of publication of application:
21.02.90 Bulletin 90/08

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: USAMI, Hiroshi
2-23-9, Fujigaoka Midoriku
Yokohama-shi Kanagawa 227(JP)
Inventor: TANAKA, Kunio
5-8-13, Tamagawacho
Akishima-shi Tokyo 196(JP)
Inventor: ONISHI, Yasushi Fanuc Mansion
Harimomi 8-304
3511-1, Shibokusa, Oshinomura
Minamitsuru-gun
Yamanashi 401-05(JP)

(74) Representative: Brunner, Michael John et al
GILL JENNINGS & EVERY 53-64 Chancery
Lane
London WC2A 1HN(GB)

(54) SHAFT CONTROL SYSTEM FOR PC.

(57) This invention relates to a shaft control system for PC (programmable controller) for controlling the operation of a mechanism driven by a cylinder or the like. There are provided a shaft control program (2) for controlling the operation of a cylinder or the like and a control program (1) for instructing a movement sequence of a mechanism. To change or correct the operation of the mechanism, only the control program (1) is changed. Accordingly, development and maintenance of programs can be made easy.

FIG. 1

DESCRIPTION.

AXIS CONTROL SYSTEM OF

PROGRAMMABLE CONTROL UNIT

TECHNICAL FIELD

The present invention relates to a control system of a programmable control device (PC) for controlling a mechanical unit driven by air or hydraulic cylinders or the like, and more specifically, to an axis control system of a programmable control unit by which a control program can be easily developed and maintained.

BACKGROUND ART

In a factory employing an advanced automation system, air or hydraulic cylinders are used to drive a loader for loading and unloading a workpiece on and from a machine. A mechanical unit driven by these cylinders is controlled by a programmable control device (PC), wherein the movement of the mechanical units is controlled by actuating electromagnetic valves and the like in response to a signal from limit switches and the like, based on a sequence program written by a ladder language as the control program of the PC.

A complex control must be carried out in accordance with respective mechanical units to actuate electromagnetic valves and control cylinders and the like. More specifically, various kinds of the electromagnetic valves actuated by air or hydraulic fluid are employed, and these cylinders have a wide variety of configurations and strokes and employ various control systems depending on the respective mechanical units, and thus the development and maintenance of a program for control thereof requires specialized knowledge, and further, the creation of the program is labor-consuming.

On the other hand, in general, a loader and the like when operated in practice repeats only relatively simple operations such as stopping at a particular position and then moving to another position and stopping there, and the like.

DISCLOSURE OF THE INVENTION

Taking the above into consideration, an object of the present invention is to provide an axis control system of a PC wherein a program is divided into two programs, an axis control program and a control program, to thereby make it easy to easy to develop and maintain the program.

To solve the above problem, in accordance with the present invention, there is provided an axis control system of a programmable control device (PC) for controlling the operation of a mechanical unit driven by a cylinder and the like having an axis control program for controlling the operation of the cylinder and the like and a control program for controlling the moving sequence of the mechanical unit.

The axis control program directly controls the cylinder and the like in response to a signal from a limit switch and the like. Therefore, the creation of the axis control program requires knowledge of mechanical units and depends on the mechanical unit to be controlled.

The control program only produces an instruction for controlling the movement of the mechanical unit, and this instruction is not directly related to the details of the mechanical unit.

The axis control program controls the operation of the mechanical unit according to an instruction from the control program. As a result, the axis control program carries out the same function as the servo amplifier in a servomotor system, and the control program carries out a function similar to an NC instruction.

Therefore, the operation of the mechanical unit can be changed or corrected by changing the control program, whereby the development and maintenance of the program is made easy.

BRIEF DESCRIPTION OF THE DRAWINGS

Figure 1 is a conceptual diagram of an axial control system of a programmable control unit according to the present invention;

Figure 2 is a diagram of a concrete example of a mechanical unit according to the present invention;

Figure 3 is a diagram of directions in which a hand is moved;

Figure 4 is a diagram of an example of a control program;

Figure 5 is a diagram of an example of an axis control program written in a ladder language for an axis P1;

Figure 6 is a diagram of an example of an axis control program written in a ladder language for an axis P2;

Figure 7 is a timing chart diagram of respective signals corresponding to an instruction of the control program shown in Figure 4;

Figure 8 is a diagram of a second example of the control program;

Figure 9 is a diagram of a third example of the control program; and

Figure 10 is a block diagram of hardware of a programmable control device (PC) as an embodiment of the present invention.

BEST MODE OF CARRYING OUT THE INVENTION

An embodiment of the present invention will be described below with reference to drawings.

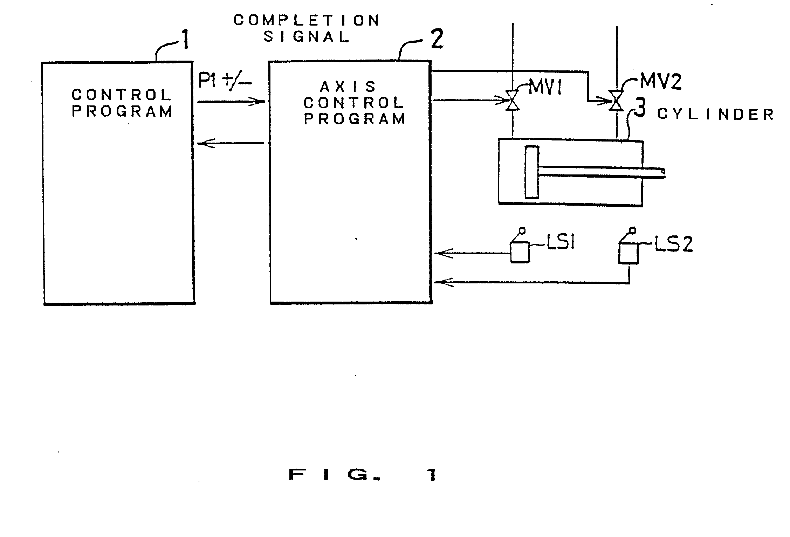

Figure 1 is a conceptual diagram of an axis control system of a PC according to the present invention, wherein 1 designates a control program for controlling the movement of an axis controlled by a cylinder or the like. This control is directed only to the name of the axis, a direction in which the axis is moved and the like and does not control the reception of a signal from a limit switch to directly operate a mechanical unit, or an electromagnetic valve and the like.

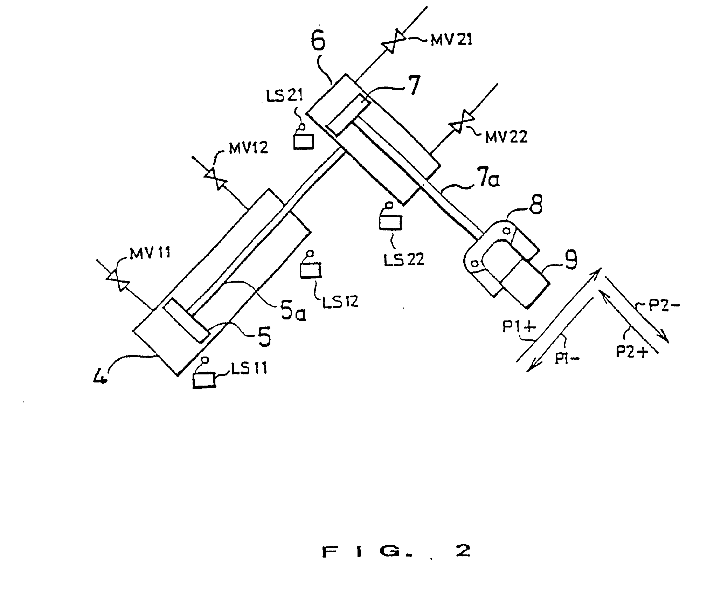

In Figure 1, 2 designates an axis control program for actuating the cylinder and the like in actual use by receiving an instruction from the control program 1, and 3 designates the cylinder for moving the mechanical unit, the cylinder 3 being controlled by opening and closing the electronic valves MV1 and MV2, and LS1 and LS2 designate limit switches for detecting a position of the piston in the cylinder 3 and notifying the axis control program 2 of that position.

With this arrangement, the operation sequence of the mechanical unit can be controlled by creating the control program 2 closely depending on the mechanical unit, controlling a simple movement of the axis by the control program 1, and changing the content of the control program 1 as necessary without the need for changing the axial control program 2 for the details of the mechanical unit. Thus, in this arrangement, the axis control program is considered to correspond to a servo amplifier and the control program to correspond to an NC instruction in a servomotor control system.

Figure 2 is a concrete example of a mechanical unit of this invention, wherein 4 designates a cylinder, 5 designates a piston which is moved in an upper right direction by electromagnetic valves MV11 and MV12, and LS11 and LS12 designate limit switches for confirming the position of the piston 5.

The piston 5 includes a rod 5a and a cylinder 6 accommodating a piston 7 therein is disposed at the extreme end of the rod 5a. The piston 7 is moved in an upper left direction by electromagnetic valves MV21 and MV22, and limit switches LS21 and LS22 are used to confirm the position of the piston 7.

The piston 7 includes a rod 7a provided with a hand 8 disposed at the extreme end thereof and gripping a workpiece 9. Accordingly, assuming that an axis controlled by the cylinder 4 is represented by P1 and an axis controlled by a cylinder 6 is represented by P2, the hand 8 or the workpiece 9 is moved in the directions shown by arrows in Figure 2.

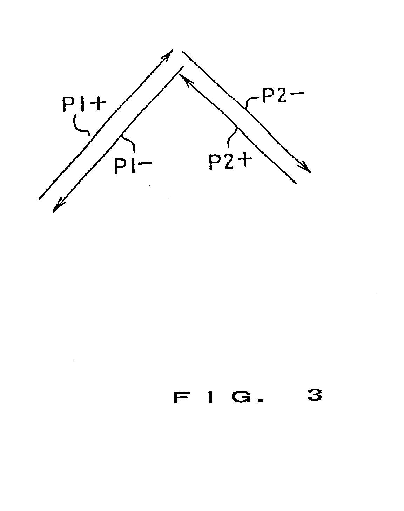

Figure 3 shows only the directions in which the hand is moved. As shown in Figure 3, the axes P1 and P2 must be moved to move the hand 8, and thus the creation of a program which does not need to take into the consideration the operation of the cylinders or the limit switches, is very convenient.

From this view point, the present invention intends to control the operation shown in Figure 3 by the control program and control the monitoring of signals from the limit switches and the operation of the electromagnetic valves by the axis control program.

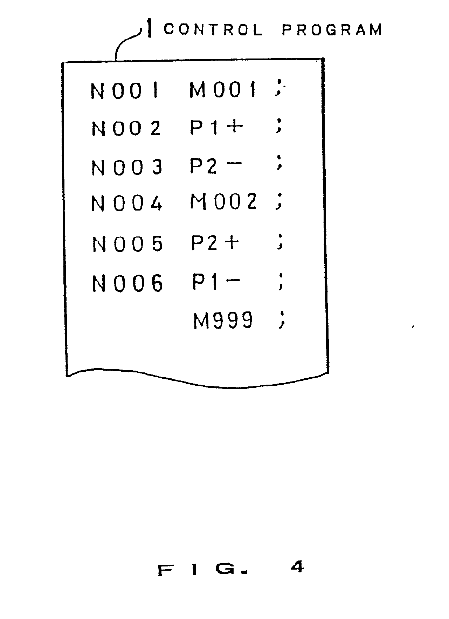

Figure 4 shows an example of the control program. Respective blocks will be described according to sequence numbers prefixed with an "N".

[N001] an auxiliary instruction such as an instruction to cause the hand 8 to grip the workpiece 9 in Figure 2;

[N002] an instruction to move the axis P1 in a positive direction;

[N003] an instruction to move the axis P1 in a negative direction;

[N004] an auxiliary instruction such as an instruction to cause the hand 8 to release the workpiece 9 in Figure 2;

[N005] an instruction to move the axis P2 in the positive direction; and

[N006] an instruction to return the axis P1 in the negative direction.

Note that M999 is an instruction to terminate a single control program.

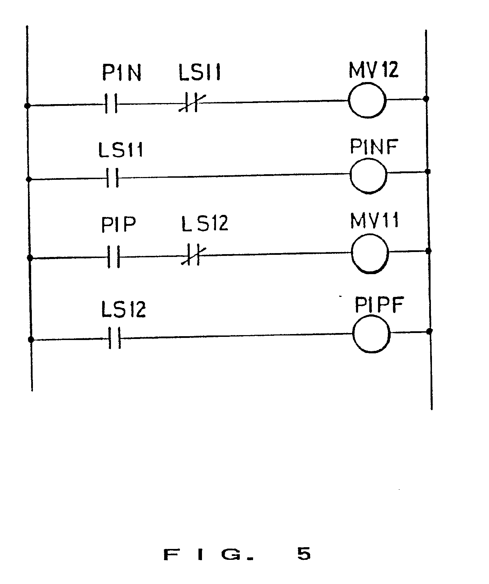

Figure 5 is an example of the axis control program for the axis P1 written in a ladder language. A relay contact P1N is an instruction for moving the axis P1 in the negative direction. More specifically, this contact is turned on by an instruction "N006 P1-;" of the control program 1 in Figure 4. The LS11 indicated by an oblique line is a break point of the limit switch LS11 in Figure 2.

A coil MV12 is turned on to produce an output signal for turning on the electromagnetic valve MV12 in Figure 2.

A contact LS11 serves as a contact of the limit switch SL11 and a coil P1NF is turned on to produce a signal confirming that the piston 5 in Figure 2 has been returned in the negative direction of the axis P1.

Likewise, a contact P1P is turned on to produce an instruction for moving the axis P1 in the positive direction, a contact LS12 serves as a break contact of the limit switch LS12, a coil MV11 is turned on to produce an output signal for actuating the electromagnetic valve MV11, a contact LS12 having an oblique line serves as a break contact of the limit switch LS12, a contact LS12 serves as a contact of the limit switch LS12 and a coil P1PF is turned on to produce a movement completion signal of the axis P1 in the positive direction.

For example, when "N002 P1+;" is instructed in Figure 4, the contact P1P of the axis program in Figure 5 is turned on, then the coil MV11 is turned on, and thus the electromagnetic valve MV11 is turned on to move the piston 5 in the positive direction of the axis P1. When the movement of the axis P1 is completed, the limit switch LS12 is turned on and the coil P1PF is turned on, and thus a movement completion signal is supplied to the control program 1.

Since the movement of the axis P1 in the negative direction is substantially the same as above, a detailed description thereof is omitted.

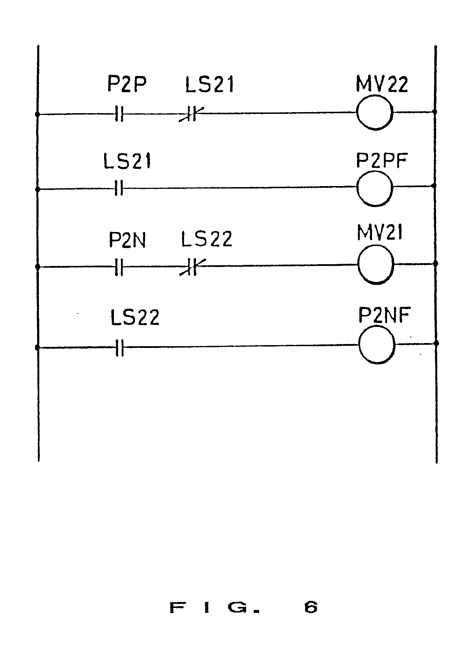

Figure 6 is an example of the axis control program for the axis P1 written in the ladder language. Since the content of the ladder language substantially corresponds to that for the axis P1 in Figure 5, a description thereof is omitted.

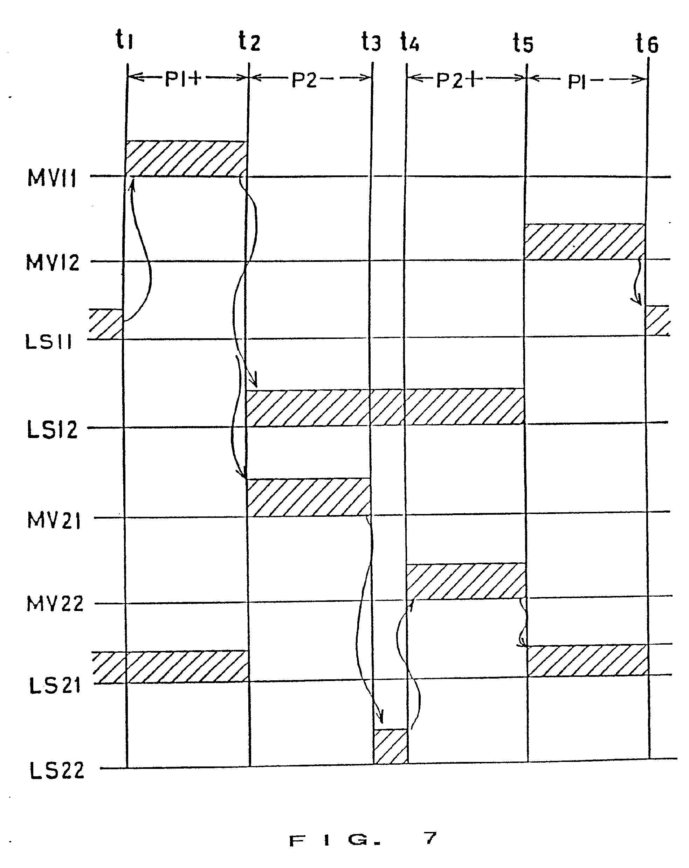

Figure 7 is a timing chart of respective signals corresponding to the instruction from the control program shown in Figure 4.

First, the hand 8 grips the workpiece 9.

A period from a time t1 to a time t2 indicates the movement of the axis P1 in the positive direction during which the electromagnetic valve MV11 is actuated to move the piston 5 in the positive direction of the axis P1.

A period from a time t2 to a time t3 indicates the movement of the axis P2 in the negative movement during which the electromagnetic valve MV21 is actuated to move the piston 7 in the negative direction of the axis P2. When the movement of the axis P2 in the negative direction is completed, the limit switch LS22 is turned on and then the hand 8 releases the workpiece 9.

A period from a time t4 to a time t5 indicates the movement of the axis P2 in the positive direction during which the electromagnetic valve MV22 is actuated to return the hand 8 in the positive direction of the axis P2.

A period from a time t5 to a time t6 indicates the movement of the axis P1 in the negative movement during which the electromagnetic valve MV12 is actuated to return the hand 8 in the negative direction of the axis P1.

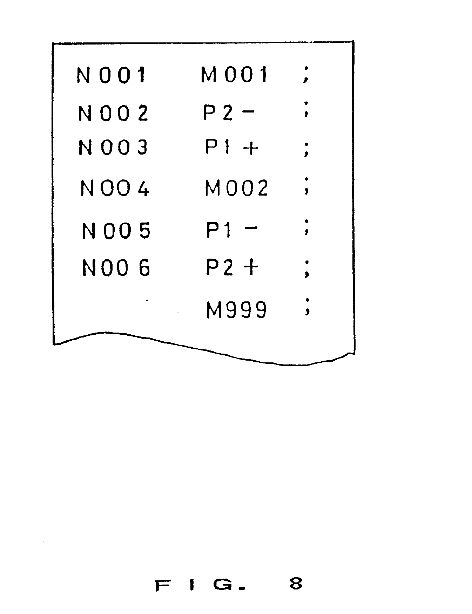

Figure 8 is a second example of the control program. This example is different from that shown in Figure 4 in that the movement of the axes P1 and P2 is inverted. More specifically, the control program shown in Figure 8 is such that the axis P2 is moved in the negative direction, the axis P1 moved in the positive direction, and so on.

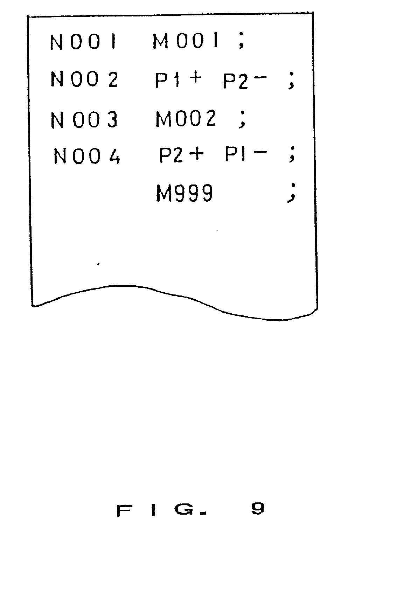

Figure 9 shows a third example of the control program. In this control program, the axes P1 and P2 are simultaneously moved, whereby the hand 8 can be moved at a high speed.

As described above, the movement of the hand shown in Figure 3 can be instructed by the creation of the axis control program shown in Figures 5 and 6 without the need for a detailed knowledge of the mechanical unit shown in Figure 2.

Further, as shown in Figures 4, 8 and 9, the movement of the hand can be changed by changing the control program. In other words, the movement of the hand can be controlled only by the instruction from the control program shown in Figure 3 and the like.

Although the axis control program is written in the ladder language in the above description, it may be written as a functional block.

In addition, although only the control of the mechanical unit controlled by the cylinders and the like is described, it is also possible for the PC to simultaneously control the mechanical unit controlled by the cylinders and the like and servomotors.

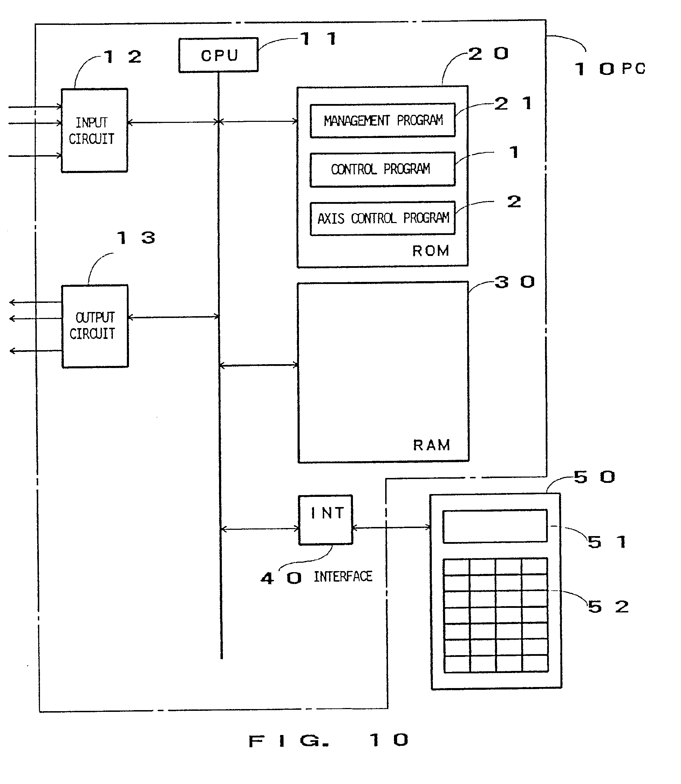

Figure 10 is a block diagram of hardware of the programmable control unit (PC) as an embodiment of the present invention, wherein 10 designates the PC, 11 designates a processor for controlling the PC as a whole, 12 designates an input circuit for receiving external signals and transmitting same to a bus after converting a signal level thereof, and 13 designates an output circuit for supplying internal output signals to external devices.

In Figure 10, 20 designates a ROM for storing a management program 21 for managing the execution of the axis control program 2 and the control program 1, the control program 1, the axis control program 2 and the like; 30 designates a RAM for storing various data and the input and output signals; 40 designates an interface for a program creation unit, i.e., an interface circuit for coupling the bus with the program creation unit; 50 designates a small program creation unit for creating and debugging the programs 1 and 2; 51 designates a liquid crystal display; and 52 designates a keyboard.

According to the present invention, as described above, since the programmable control unit for controlling the movement of a mechanical unit driven by cylinders and the like has a program divided into a control program and an axis control program, the program is easily developed and maintained, whereby the reliability of the PC is improved.

CLAIMS

1. An axis control system of a programmable control device (PC) for controlling the operation of a mechanical unit driven by a cylinder and the like, comprising:

an axis control program for controlling the operation of said cylinder and the like and a control program for controlling the moving sequence of said mechanical unit.

2. An axis control system of a programmable control device according to claim 1, wherein said control program is executed in parallel with the operation of a servomotor.

3. An axis control system of a programmable control device according to claim 1, wherein said control program operates a plurality of axes in parallel.

4. An axis control system of a programmable control device according to claim 1, wherein said axis control program is written in a ladder language.

5. An axis control system of a programmable control device according to claim 1, wherein said axis control program is written as a functional block.

6. An axis control system of a programmable control device according to claim 1, wherein said control program controls the name of an axis and the direction in which the axis is to be moved.

7.   An axis control system of a programmable control device according to claim 6, wherein said control program controls a speed of movement of the axis.

EP 0 354 968 A1

COMPLETION
SIGNAL

CONTROL
PROGRAM

P1 +/−

AXIS
CONTROL
PROGRAM

MV1

MV2

3 CYLINDER

LS1

LS2

F I G.   1

F I G. 2

F I G. 3

1 CONTROL PROGRAM

```
N001   M001 ;
N002   P1+  ;
N003   P2-  ;
N004   M002 ;
N005   P2+  ;
N006   P1-  ;
       M999 ;
```

F I G.   4

F I G. 5

F I G. 6

F I G. 7

```
N 0 0 1      M 0 0 1    ;
N 0 0 2      P 2 -      ;
N 0 0 3      P 1 +      ;
N 0 0 4      M 0 0 2    ;
N 0 0 5      P 1 -      ;
N 0 0 6      P 2 +      ;
             M 9 9 9    ;
```

F I G.   8

```
N001   M001 ;

N002   P1+ P2- ;

N003   M002 ;

N004   P2+ PI- ;

       M999     ;
```

FIG. 9

FIG. 10

# INTERNATIONAL SEARCH REPORT

International Application No PCT/JP89/00117

## I. CLASSIFICATION OF SUBJECT MATTER (if several classification symbols apply, indicate all) ⁷

According to International Patent Classification (IPC) or to both National Classification and IPC

Int. Cl$^4$    G05B19/04

## II. FIELDS SEARCHED

| Minimum Documentation Searched ⁷ | |
|---|---|
| Classification System | Classification Symbols |
| IPC | G05B19/04 |

| Documentation Searched other than Minimum Documentation to the Extent that such Documents are Included in the Fields Searched ⁸ |
|---|
| Jitsuyo Shinan Koho       1932 - 1989 <br> Kokai Jitsuyo Shinan Koho    1971 - 1989 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| X | JP, A, 56-40905 (Komatsu Ltd.) 17 April 1981 (17. 04. 81) (Family: none) | 1-7 |
| A | JP, A, 62-20029 (Toshiba Machine Co., Ltd.) 28 January 1987 (28. 01. 87) (Family: none) | 1-7 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 24, 1989 (24. 04. 89) | May 15, 1989 (15. 05. 89) |
| International Searching Authority | Signature of Authorized Officer |
| Japanese Patent Office | |

Form PCT/ISA/210 (second sheet) (January 1985)